# EUROPEAN PATENT APPLICATION

(11) **EP 2 005 867 A1**
(43) Date of publication of application: **24.12.2008**
(21) Application number: 07110835.1
(22) Date of filing: 22.06.2007
(51) Int. Cl.: A47J 43/07, A47J 45/02

(54) **Kitchen apparatus, stabilizer and arm assembly**

(71) Applicant: Koninklijke Philips Electronics N.V., 5621 BA Eindhoven (NL)
(72) Inventor: The designation of the inventor has not yet been filed
(74) Representative: Wolfs, Marc Johannes Maria

(57) **Abstract**

The present invention provides a kitchen apparatus, comprising a housing (1), having a bottom part (58); a motor (2) that is arranged inside the housing (1); a stabilizer that is arranged under the bottom part (58) of the housing, the stabilizer comprising: a vacuum pad (11) provided with an air hole (79); and a vacuum release valve (12), having a closed position wherein the vacuum release valve seals the air hole (79), and an open position wherein the vacuum release valve (12) is lifted from the air hole, leaving the air hole open. In an embodiment, the apparatus is a food processor comprising a food container (4) having a cover (5). A second arm part (206) is pivotably connected to the first part (204), having a closed position to secure the cover (5) on the food container (4), and an open position to allow the cover to be removed from the food container. The arm comprises a switch (26) that is connected to the motor (2), to enable operation of the motor when the second part is in the closed position, and to disable operation of the motor when the second part is in the open position.

## Description

### FIELD OF THE INVENTION

The present invention relates to a kitchen apparatus, specifically a food processor, blender, or mixer. The food processor is suitable for processing food, for instance grinding, mixing, blending, juicing, cutting, slicing, and/or kneading. Also, the invention relates to a stabilizer and an arm assembly suitable for the kitchen apparatus.

### BACKGROUND OF THE INVENTION

US-2007/102551-A1 provides a food processor comprising a food container arranged on a base unit, and a cover for covering the food container. The food processor comprises retaining means for retaining the food container on the base unit, and for retaining the cover on the food container. The retaining means comprise a retaining member that is arranged on the inside of the cover, and another retaining member that is provided on a drive shaft configuration inside the food container.

The more powerful the motor of the US-2007/102551-A1 food processor is, the more likely it is to move around during use. During use, the food processor therefore requires continuous user supervision.

### OBJECT OF THE INVENTION

The present invention aims to provide a more stable motorized kitchen apparatus, to obviate user supervision and improve the safety of the apparatus.

### SUMMARY OF THE INVENTION

The present invention provides a kitchen apparatus, comprising:
- a housing, having a bottom part;
- a motor that is arranged inside the housing;
- a stabilizer that is arranged under the bottom part of the housing, the stabilizer comprising:
   - a vacuum pad provided with an air hole;
   - a vacuum release valve, having a closed position wherein the vacuum release valve seals the air hole, and an open position wherein the vacuum release valve is lifted from the air hole, leaving the air hole open.

When placed on a surface, preferably a flat surface, the stabilizer will secure and stabilize the apparatus relative to the surface. The stabilizer obviates user supervision during use, as the stabilizer prevents the apparatus from moving around. Even if the motor has a relatively high capacity, for instance a capacity higher than about 600 W, 700 W, or 800 W, the stabilizer prevents movement of the apparatus relative to the surface.

In an embodiment, the stabilizer further comprises a user operable vacuum release lever that is connected to the vacuum release valve. The lever makes raising the vacuum release valve, and subsequent removal of the apparatus from the surface easier. Also, a spring may be arranged between the vacuum lever and the housing to push the vacuum lever away from the housing and to seal the air hole with the vacuum valve.

In another embodiment, the stabilizer comprises a vacuum pump that is connected to the vacuum pad for evacuating the vacuum pad. The motorized vacuum pump can create a lower air pressure within the vacuum pad, thus stabilizing the apparatus even more.

A diameter of the vacuum pad may be equal to or larger than about 40%, 50%, 60% or 70% of a cross section of the bottom part of the housing. The apparatus of the invention may be provided with for instance three of four feet, each comprising a suction cup. Said suction cups however have a diameter that is relatively small compared to the cross section of the bottom part. The diameter is for instance about 1 to 2 cm, compared to a bottom part cross section of for instance about 20 to 30 cm. The vacuum pad of the stabilizer is considerably larger than said suction cups. Due to its larger diameter, the stabilizer provides a relatively strong force holding and stabilizing the apparatus.

In an embodiment, the apparatus is a food processor, comprising:
- a food container that is arranged on a top part of the housing;
- a cover for covering the food container;
- a blade that is arranged in the food container and is driveable by the motor;
- an arm assembly for retaining the cover on the food container,
wherein the arm assembly comprises an arm that is arranged on the outside of the cover.

The arm provides a strong and visible means to retain the cover on the food container during use, thus reassuring the user and enabling unsupervised use.

Preferably, the arm comprises a first part, and a second part that is pivotably connected to the first part, having a closed position to secure the cover on the food container, and an open position to allow the cover to be removed from the food container, wherein the arm comprises a switch that is connected to the motor, to enable operation of the motor when the second part is in the closed position, and to disable operation of the motor when the second part is in the open position. The switch in the arm improves the security, as the motor will only operate if the second arm part is in the closed position, wherein the cover seals the food container and the arm retains the cover on the food container.

In a further embodiment, the arm assembly comprises a column that is connected to the arm, the column being vertically moveable within a hollow pipe of the housing, wherein the inside of the pipe is provided with two or more grooves, and wherein the column comprises a spring-cam assembly to lock the column relative to one of the grooves. Due to the vertically adjustable arm, the apparatus is adjustable to food containers of several predetermined dimensions. The vertical adjustment of the column may for instance cover a vertical range of about 5 to about 30 cm. Suitable food containers may have a height in the range of 5 to 30 cm, and/or a diameter in a range of about 5 to 30 cm.

In an embodiment, the column comprises a vertical adjustment knob that is connected to the spring-cam assembly, the vertical adjustment knob being arranged to unlock a column locking pin of the spring-cam assembly from a certain groove and to enable vertical movement of the column relative to the pipe, to lock the column locking pin in another groove. The spring-cam assembly including the column pocking pin provides a relatively simple, robust and cost efficient embodiment to enable vertical adjustment of the arm assembly.

In a further embodiment, the apparatus comprises a timer that is connected to the motor, wherein the timer is arranged to start the motor at a user determined starting time, and to stop the motor after lapse of a user determined operating time. The timer switches off the motor after lapse of the pre-set operating time, thus obviating user supervision and preventing motor damage or break down.

Preferably, the timer comprises a data processor that is arranged in the housing; a display to display output of the data processor; input means including one or more buttons to input for instance the starting time and/or the operating time; and a switch that is connected to the data processor to enable or disable power supply to the motor.

In an embodiment, the housing comprises a locking assembly comprising:
- a food container locking pin, having a lock position wherein the food container is locked in a predetermined position and an unlock position wherein the food container is removable from the housing;
- a spring that is arranged between the food container locking pin and the housing, to push the food container locking pin in the lock position; and
- a release knob that is connected to the food container locking pin, and is operable to transfer the food container locking pin in the unlock position.

The locking assembly prevents movement of the food container, for instance due to attractive forces of food rotating within the food container.

According to another aspect, the present invention provides a stabilizer for the apparatus of any of the previous claims, comprising:
- a vacuum pad provided with an air hole;
- a vacuum release valve, having a closed position wherein the vacuum release valve seals the air hole, and an open position wherein the vacuum release valve is lifted from the air hole, leaving the air hole open.

According to still another aspect, the present invention provides an arm assembly for the apparatus described above, comprising an arm for retaining a cover on a food container, wherein the arm that is arranged on the outside of the cover, the arm comprising:
- a first part;
- a second part that is pivotably connected to the first part, having a closed position to secure the cover on the food container, and an open position to allow the cover to be removed from the food container;
- wherein the arm comprises a switch that is connected to a motor of the apparatus, to enable operation of the motor when the second part is in the closed position, and to disable operation of the motor when the second part is in the open position.

### BRIEF DESCRIPTION OF THE DRAWINGS

The above and additional features and advantages of the present invention are elucidated referring to the enclosed drawings, wherein:
Fig. 1 shows a perspective view of an embodiment of an apparatus of the present invention;
Fig. 2 shows a perspective cross section of the apparatus of Fig. 1; and
Fig. 3 shows a perspective view of a stabilizer according to the present invention, suitable for the apparatus of Fig. 1.

### DETAILED DESCRIPTION OF EXAMPLES

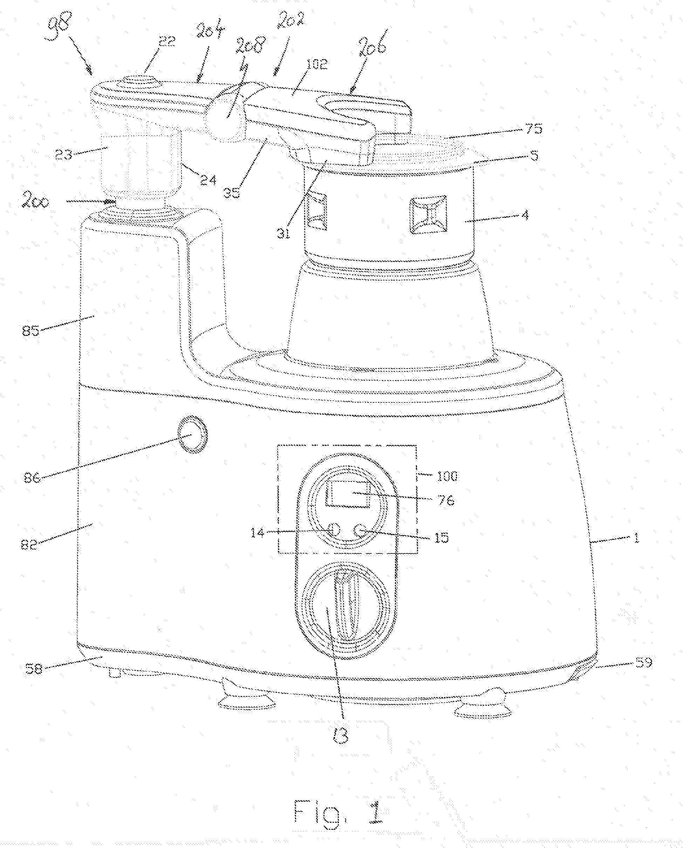

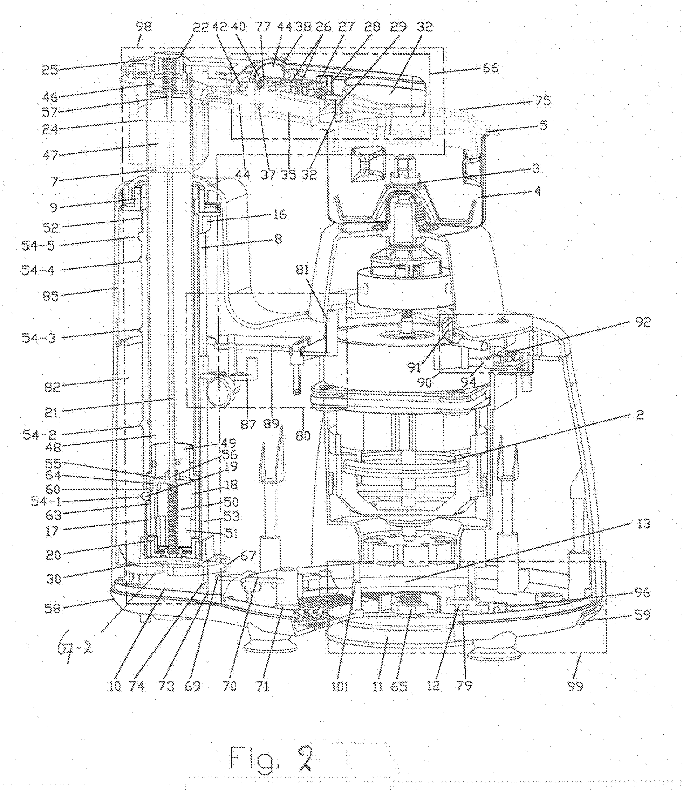

An apparatus according to the present invention includes the food processor shown in Fig. 1 and 2. The food processor comprises a housing 1. The housing 1 comprises bottom part 58, middle part 82 and top part 85. Food container 4, for instance a metal jar, is arranged on the middle part, and is partly enclosed by the top part 85. A removeable lid or cover 5 covers and closes the food container 4. The top of the cover 5 is provided with a circular ridge 75. The contour of the ridge 75 corresponds to part 31 of arm 200. The arm, part of arm assembly 98, will be described in more detail below.

An electric motor 2 (Fig. 2) is arranged inside the housing 1, and is connected to suitable cables to connect the motor to an external electric power source such as mains (not shown). The motor 2 is arranged to drive rotateable blade 3 inside the food container 4. The blade 3 is connectable to an end of an axis that is drivable connected to the motor 2.

To improve safety of the apparatus, and to allow unsupervised operation of the apparatus, the apparatus may include one, two or more of the following features. Said features are enclosed by dash-dotted boxes shown in Fig. 2. I.e., the housing 1 of the food processor of the present invention comprises bayonet release 80, bayonet locking safety 90, arm assembly 98, stabilizer 99, and timer 100.

The bayonet release 80 comprises stopper pin 81, which is arranged in the middle part 82 (Fig. 2). The stopper pin is connected to a spring (not shown) to keep the stopper pin 81 in a predetermined default position. Bayonet release knob 86 (Fig. 1) extends through the middle part 82 and may be operated from outside the housing. The knob 86 is guidable arranged in bracket 87 (Fig. 2) that is fixed within the middle part 82. A spring (not shown) is connected to the knob 86 to keep the knob in a default position. The knob 86 is connected to one end of lever 89. The lever 89 is pivotably arranged within the middle part, and at the opposite end is connected to the stopper pin 81 (Fig. 2).

The bayonet locking safety 90 comprises a food container safety lever 91 which is arranged in the middle part 82 of housing 1 (Fig.2). The food container safety lever 91 is arranged under spring pressure, i.e. a spring is arranged between the housing and the safety lever. The safety lever 91 is located under a bayonet lock (not shown), which is an integral part of the top part 85 of housing 1. The food container safety lever is connected to micro switch 92 via lever 94, which is arranged in the middle part 82 of the housing 1. Lever 94 is also arranged under spring pressure. The bayonet lock is arranged in the top part 85, and locks the food container with respect to the housing and prevents the food container from being rotated by the material of the food, which during use may be contained in the food container.

The arm assembly 98 comprises a column 200, and an arm 202 which is attached to a top end of the column 200 (Fig. 1). The arm comprises a first part 204 and a second part 206. The second part 206 can pivot with respect to the first part 204 at the position of hinge 208. Herein below, first the construction of the column 200 will be described, followed by a description of the arm 202.

The column 200 comprises a pipe or tube 7, which is arranged within an outer pipe 8 that is fixed to housing 1 (Fig. 2). The outer pipe 8 comprises slider 17 near the bottom end thereof, and is secured between top cap 16 and bottom cap 30. The top cap 16 and the bottom cap 30 are arranged within top bearing 9 and bottom bearing 10 at respectively the top end 52 and bottom end 53 of the outer pipe 8. The top bearing 9 is arranged within the top part 85, and the bottom bearing 10 is arranged within the bottom part 58. The bottom bearing 10 is provided with stopper 73, which is contained within cut-out 74. The cut-out 74 is provided in the bottom cap 30. The bottom cap 30 is provided with slot 67, and with one or more other slots 67-2. The other slot 67-2 and slot 67 are 90 degrees apart, seen in a direction along the length of pipe 8. Pin 69, which is an integral part of indexing lever 70, is in the position shown in Fig. 2 located within slot 67. The pin 69 is suitable to be located in the other slot 67-2. The two or more slots in combination with pin 69 define fixed positions of the outer pipe 8. I.e., the outer pipe 8 may be rotated along its length, and fixed by the pin 69 into two or more positions which are for instance 90 degrees apart.

The indexing lever 70 is provided with a torsion spring (not shown), and is located over a boss 71. The boss 71 is an integral part of the bottom part 58 of the housing 1.

The inside of the outer pipe 8 is provided with grooves 54-1, 54-2, ... 54-5, to accommodate column locking pin 19. The column locking pin 19 is part of a spring-cam assembly. The spring-can assembly is mainly arranged near bottom end 48 of the inner pipe 7, and is via rod 21 connected to knob 22.

The cam assembly comprises a cylindrical slider 17 near the bottom end 48 of the pipe 7. The slider 17 comprises a cylindrical wall that is provided with slot 16 for accommodating the column locking pin 19.

A cylindrical cam structure 18 is provided inside the slider 17. The cam structure 18 is arranged under spring pressure of spring 50. The spring 50 is arranged between the top end 55 of the com structure 18 and a bottom cap 20. The bottom cap 20 is fixed at the bottom end 51 of slider 17. The cam structure 18 is near the top end 55 provided with a recess 64, to accommodate the column locking pin 19 when the cam structure 18 is pushed down using knob 22. Bottom end 48 of the inner pipe 7 is fixed to the top end 49 of the slider 17.

The knob 22 is located at the top end 47 of the inner pipe 7. The knob 22 is enclosed by an elbow connecting structure, including elbow front 23, elbow back 24 and elbow top cover 25. The knob 22 is housed within cylindrical bracket 57, which is fixed at the top end 47 of the column 7. A spring 46 is arranged between the knob 22 and a cylindrical bracket 57. The bracket 57 is fixed to top elbow top part 25, which is attached to the outside of pipe 7.

The arm 202 comprises a first part 204 and a second part 206. The first part 204 is fixed to the elbow top cover 25. The second part 206 is pivotally connected to the first part 204 at hinge 208 (Fig. 1).

The arm 202 comprises micro switches 26, a set of spring loaded safety levers 27, 28, and a spring loaded operating pin 29 (Fig. 2). The operating pin 29 is an integral part of safety lever 28. The switches, levers and operating pin are housed within top part 102 and bottom part 35 of the second arm part 206. The top part 102 and the bottom part 35 are hinged in ends 38. The ends 38 are connected to the first arm part 204. The first arm part 204 is fixed to elbow frond 23 and elbow back 24. The elbow front 23 and elbow back 24 are fixed to top end 47 of the inner pipe 7.

Near the hinge ends 38, the second arm part 206 comprises stoppers 37. The hinge 208 houses one or more indexing pins 40, which are backed by springs (not shown). The one or more indexing pins 40 are held against spherical grooves 42, 47, which are provided in brackets 44. The brackets 44 are fixed within the top 102 of the second arm part 206.

The underside of the second arm part 206 is provided with a rubber pad 31. The rubber pad 31 is fixed in circular groove 32 of the second arm part 206. The second arm part 206 further comprises operating pin 29, which extends in a vertical direction.

The bottom part 58 of the housing of the apparatus according to the present invention is provided with a stabilizer, to stabilize the apparatus on a surface of a base, for instance a table, a counter, etc.

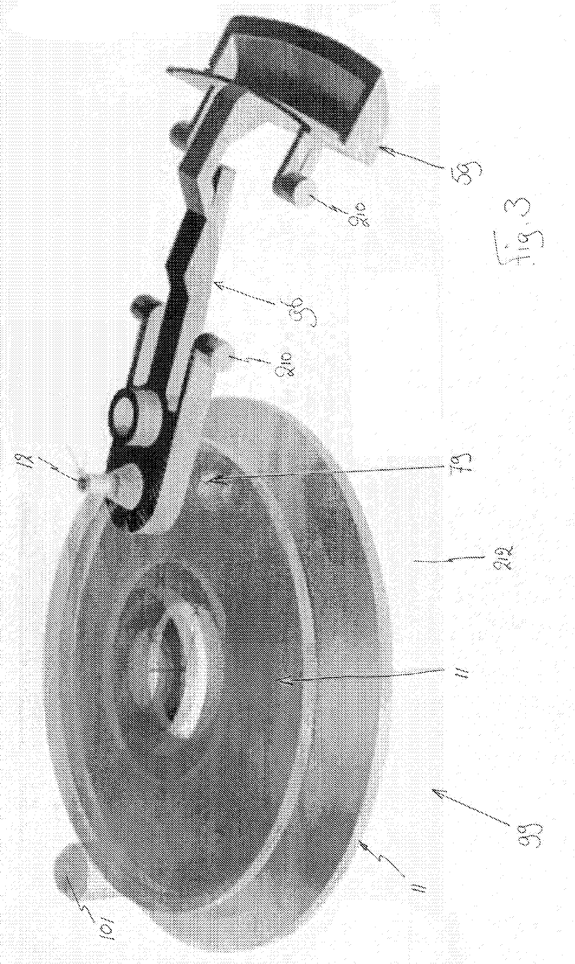

The stabilizer comprises vacuum pad 11, which is arranged at the bottom part 58 of the housing 1 (Fig. 2). The vacuum pad 11 is fixed to the housing using bolt 65. An air hole 79 is arranged in the vacuum pad 11. The air hole 79 is provided with a vacuum release valve 12. The vacuum release valve 12 has a closed position, closing the air hole 79 under spring pressure, and an open position wherein the vacuum valve leaves the air hole open. The vacuum release valve 12 is attached to lever 96 (Fig. 2, 3). The lever 96 is at one end provided with a vacuum release knob 59, which is operable by the user of the apparatus (Fig. 1). The lever 96 is provided with a number of cams 210, which are guided in corresponding grooves (not shown) which are arranged on the inside of the bottom part 58. The vacuum pad may optionally be provided with a second air hole, sealed by a second air release valve 101 (Figs. 2, 3).

In an embodiment (not shown), the stabilizer is provided with a motorized vacuum pump. The pump may be connected to either valve 12 or valve 101.

The apparatus (Fig. 1) of the present invention comprises a timer 100. The timer comprises a controller, a display 76, control buttons 14, 15, release, switches, and/or a transformer.

Operation of the apparatus of the present invention is elucidated below.

First the apparatus according to the present invention is placed on a flat working platform 212 (Fig. 3). When the vacuum pad 11 touched the platform 212, air contained within the vacuum pad 11 is released through the air hole 79 and air release valve 12, and/or through the second air release valve 101. Due to the volume and/or the diameter of the vacuum pad 11, which is relatively large compared to a cross section of the bottom part 58 of the apparatus, the created vacuum holds the apparatus firmly on the surface 212.

In case the stabilizer of the apparatus comprises a vacuum pump, the pump may evacuate air from the vacuum pad 11. The pump creates a higher vacuum, i.e. lower air pressure within the vacuum pad, thus improving the stability of the apparatus. Also, in combination with the vacuum pump, the vacuum pad may have a larger volume, and/or the vacuum pad may be suitable for a rough surface.

Initially, the second arm part 206 is rotated in an upward or a downward direction relative to the first arm part 204. As shown in Fig. 2, the column locking pin 19 is positioned in groove 54-1, and is locked by cam profile 63. At the hinge 208, indexing pin 40 is held against spherical groove 42, which is provided in brackets 44. Near the bottom part of the pipe 8, the pin 69 of indexing lever 70 is engaged in slot 67 of the bottom cap 30, thus fixing the position of the arm 202.

The vertical position of the arm 202 can be changed by pressing the knob 22 in a downward direction. Pressing knob 22 results in a downward movement of the rod 21, causing cam structure 18 to move down within slider 17. The recess 64 allows the column locking pin 19 to move away from groove 54-1 within slot 60 of the slider 17. To change the vertical position of the arm 202, a user may manually pull elbow 22, 23 up (or down), while holding knob 22 pressed down. Pulling the elbow 22, 23 causes an upward movement of the inner pipe 7 within the outer pipe 8. Now, knob 22 may be released and the inner pipe 7 may be moved up until the column locking pin locks in, for instance, the next groove 54-2. The vertical positions of the grooves 54-1, 54-2 and so on are related to the heights of various accessories, which are suitable for use with the apparatus, such as the food container 4.

Subsequently, the second part 206 is pivoted into a horizontal direction, as shown in Fig. 1. The stopper 37 and the indexing pin 40, which moves from a spherical groove 42 to the spherical groove 77 that is provided in brackets 44, keep the second arm part 206 in the horizontal position, indicated by 66 (Fig. 2).

As a next step, the food container 4 containing eatables is arranged on the top part 85 of the housing 1. When arranging the food container 4 on the top part 85, the stopper pin 81 is pushed down by a locking pip (not shown), which is provided at the bottom part of the food container 4. When the food container 4 is locked, the locking pip operates on stopper pin 81, which is subsequently pushed up under spring pressure. While locking the food container, a locking pip of the food container also pushes the safety lever 91 in a locking direction. The safety lever 91 in turn operates switch 92 via lever 94 to a closed position.

After the cover 5 is arranged to close the food container 4, knob 22 is pressed down and the elbow part 23, 24 is pushed down until the rubber pad 31 of the arm touches the cover 5. Upon touching the cover 5, the operating pin 29 of the second arm part 206 is pressed by the circular rib 75 which is provided on top of the cover 5. The operating pin 29 operates switch 26 to a close position via a set of safety levers 27, 28. The switch 26 is connected to the motor 2, and the closed position of the switch 26 enables operation of the motor 2. Incorrect contact between the arm and the circular rib 75 of the cover 5 will result in switch 26 returning to its open position, wherein operation of the motor 2 is disabled, thus ensuring save operation.

The knob 22 is subsequently released, and due to spring pressure of springs 50, 57, the knob 22 and the cam structure 18 move upward. The locking pin 19 is pushed into groove 54-1 (or any other of the grooves 54-2..., 54-5, depending on the type of food container that is used), thus locking the pipe 7 in its position.

Timer 100 comprises control buttons 14, 15 and display 76 (Fig. 1). Using the buttons 14, 15, a start time and/or an operating time can be set. The speed switch 13 can be turned to select a certain speed or motor capacity. The motor will start rotating the blade 3 immediately, or at the desired starting time. The timer will end the operation of the motor 2 after lapse of the set operating time. After lapse of the operating time, the timer will switch the apparatus into a "stand-by" mode.

To remove the food container 4, the user presses knob 22 down and pulls the elbow 23, 24 in an upward direction. Operating pin 29 of the second arm part 206 moves downward due to spring pressure, and subsequently a set of safety levers 27, 28 move due to spring pressure, causing the switch 26 to open. The open switch 26 disables the operation of the motor 2.

For easy removal of the food container, the arm 202 may be rotated around the axis of the pipe 7. To rotate the arm, the pin 69 of the indexing lever 70 is moved from slot 67 to another slot, for instance slot 67-2, which is 90 degrees apart from slot 67 on the bottom cap 30. The slots determine pre-set positions of the arm 202. The rotational movement of the arm 202 around the axis of the column 7 is restricted by stopper 73, which is provided on the bottom bearing 10, and by the cut-out 74 which is provided on the bottom cap 30.

To remove the food container 4, the user presses the bayonet release knob 86 (Fig. 1). The bayonet release knob 86 pushed stopper pin 81 downward via lever 89. When the food container 4 is passed over stopper pin 81, releasing the bayonet release knob 86 results in an upward movement of the stopper pin 81 due to spring pressure. At the same time, the food container safety lever 91 is pushed in a direction of unlocking, due to spring pressure, causing switch 92 to open.

The apparatus may be removed from the surface 212 by releasing the vacuum of the vacuum pad 11. To release the vacuum, the user pulls the vacuum release knob 59 upward. When pulling the release knob upward, the lever 96 and the valve 12 which is attached to the lever, are also pulled upward, thus opening air hole 79. Air will flow into the vacuum pad, causing release of the vacuum and enabling removal of the apparatus from the surface 212.

Other features, embodiments or modifications are described herein below.

If the knob 22 is pressed down to pull the elbow 23, 24 upward, the operating pin 29 moves down due to spring pressure. A set of safety levers 27, 28 moves due to spring pressure, which causes a micro-switch to open. In this situation, the apparatus according to the present invention will stop instantaneously, due to electrical breaking.

In case of a power cut, and a resume of power, the timer will transfer the apparatus into a stand-by mode. The display 76 will show 00:00. The correct time may be set using the control buttons 14, 15.

When the apparatus of the invention operates, the apparatus may be stopped manually by switching off the speed switch 13. The display 76 will show the remaining set operating time.

In case the food container 4 is only partially locked, the micro-switch 92 will still be open. The display 76 will indicate the error.

In case the second arm part bottom 35 is not correctly contacting the cover 5, the micro-switches 26 are open. The display will indicate the error.

In case the mixer or grinder stops due to an overload condition, an overload switch will switch to an overload position. The display 76 will indicate the error. The overload switch must be reset, the speed switch 13 must be switched off, and the time must be set using the control buttons 14, 15.

The food container 4 may for instance include a metal jar. The apparatus of the invention is also suitable for other food containers, for instance a transparent blender jar, and/or a centrifugal juicer jar.

The stabilizer of the present invention may be incorporated in all products with dynamic operating conditions. Such products include apparatus with electrical motors and/or apparatus with enclosures or lids like food processors/blenders, coffee makers etc.

The present invention is not limited to the above described embodiments. Many modifications of the embodiments are invisible within the scope of the appended claims.

## Claims

1. Kitchen apparatus, comprising:
- a housing, having a bottom part;
- a motor that is arranged inside the housing;
- a stabilizer that is arranged under the bottom part of the housing, the stabilizer comprising:
- a vacuum pad provided with an air hole;
- a vacuum release valve, having a closed position wherein the vacuum release valve seals the air hole, and an open position wherein the vacuum release valve is lifted from the air hole, leaving the air hole open.

2. The apparatus of claim 1, wherein the stabilizer further comprises:
- a user operable vacuum release lever that is connected to the vacuum release valve.

3. The apparatus of claim 2, wherein a spring is arranged between the vacuum lever and the housing to push the vacuum lever away from the housing and to seal the air hole with the vacuum valve.

4. The apparatus of claim 1, wherein the stabilizer comprises:
- a vacuum pump that is connected to the vacuum pad for evacuating the vacuum pad.

5. The apparatus of any of the previous claims, wherein a diameter of the vacuum pad is equal to or larger than about 40%, 50%, 60% or 70% of a cross section of the bottom part of the housing.

6. The apparatus of any of the previous claims, wherein the motor has a capacity higher than about 600 W, 700 W, or 800 W.

7. The apparatus of any of the previous claims, wherein the apparatus is a food processor, comprising:
- a food container that is arranged on a top part of the housing;
- a cover for covering the food container;
- a blade that is arranged in the food container and is driveable by the motor;
- an arm assembly for retaining the cover on the food container,
wherein the arm assembly comprises an arm that is arranged on the outside of the cover.

8. The apparatus of claim 7, wherein the arm comprises:
- a first part;
- a second part that is pivotably connected to the first part, having a closed position to secure the cover on the food container, and an open position to allow the cover to be removed from the food container;
- wherein the arm comprises a switch that is connected to the motor, to enable operation of the motor when the second part is in the closed position, and to disable operation of the motor when the second part is in the open position.

9. The apparatus of claim 7 or 8,
- wherein the arm assembly further comprises a column that is connected to the arm, the column being vertically moveable within a hollow pipe of the housing,
- wherein the inside of the pipe is provided with two or more grooves,
- wherein the column comprises a spring-cam assembly to lock the column relative to one of the grooves.

10. The apparatus of claim 9,
- wherein the column comprises a vertical adjustment knob that is connected to the spring-cam assembly, the vertical adjustment knob being arranged to unlock a column locking pin of the spring-cam assembly from a certain groove and to enable vertical movement of the column relative to the pipe, to lock the column locking pin in another groove.

11. The apparatus of any of the claims 7-10, comprising
- a timer that is connected to the motor;
- wherein the timer is arranged to start the motor at a user determined starting time, and to stop the motor after lapse of a user determined operating time.

12. The apparatus of claim 11, wherein the timer comprises:
- a data processor that is arranged in the housing;
- a display to display output of the data processor;
- input means including one or more buttons to input for instance the starting time and/or the operating time; and
- a switch that is connected to the data processor to enable or disable power supply to the motor.

13. The apparatus of any of the claims 7-12, wherein the housing comprises a locking assembly comprising:
- a food container locking pin, having a lock position wherein the food container is locked in a predetermined position and an unlock position wherein the food container is removable from the housing;
- a spring that is arranged between the food container locking pin and the housing, to push the food container locking pin in the lock position; and
- a release knob that is connected to the food container locking pin, and is operable to transfer the food container locking pin in the unlock position.

14. Stabilizer for the apparatus of any of the previous claims, comprising:
- a vacuum pad provided with an air hole;
- a vacuum release valve, having a closed position wherein the vacuum release valve seals the air hole, and an open position wherein the vacuum release valve is lifted from the air hole, leaving the air hole open.

15. Arm assembly for the apparatus of any of claims 1-13, comprising an arm for retaining a cover on a food container, wherein the arm that is arranged on the outside of the cover, the arm comprising:
- a first part;
- a second part that is pivotably connected to the first part, having a closed position to secure the cover on the food container, and an open position to allow the cover to be removed from the food container;
- wherein the arm comprises a switch that is connected to a motor of the apparatus, to enable operation of the motor when the second part is in the closed position, and to disable operation of the motor when the second part is in the open position.

16. The arm assembly of claim 15, further comprising a column that is connected to the arm, the column being vertically moveable within a hollow pipe,
- wherein the inside of the pipe is provided with two or more grooves, and
- wherein the column comprises a spring-cam assembly to lock the column relative to one of the grooves.
